# EUROPÄISCHE PATENTSCHRIFT

(11) **EP 3 553 205 B1**
(45) Veröffentlichungstag und Bekanntmachung des Hinweises auf die Patenterteilung: **19.05.2021**
(21) Anmeldenummer: 19168011.5
(22) Anmeldetag: 09.04.2019
(51) Int. Cl.: C25B 1/00, C25B 1/04, C25B 9/73, C25B 15/08

(54) **VERFAHREN UND VORRICHTUNG ZUR HERSTELLUNG VON OXIDATIONSPRODUKTEN**
METHOD AND DEVICE FOR PRODUCING OXIDATION PRODUCTS
PROCÉDÉ ET DISPOSITIF DE FABRICATION DE PRODUITS D'OXYDATION

(30) Priorität: 10.04.2018 DE 102018205344
(43) Veröffentlichungstag der Anmeldung: 16.10.2019
(73) Patentinhaber: Forschungszentrum Jülich GmbH, 52425 Jülich (DE)
(72) Erfinder: Foit, Severin, 52441 Linnich (DE); Dittrich, Lucy, 52074 Aachen (DE); de Haart, Dr., L.G.J., 52072 Aachen (DE); Eichel, Prof. Dr., Rüdiger-A., 52428 Jülich (DE)
(74) Vertreter: Gille Hrabal Partnerschaftsgesellschaft mbB Patentanwälte

(56) Entgegenhaltungen:
- WO-A1-2015/082130
- WO-A1-2018/054627
- US-A1- 2014 272 734
- US-A1- 2017 175 277
- SEVERIN R. FOIT ET AL: "Power-to-Syngas: An Enabling Technology for the Transition of the Energy System?", ANGEWANDTE CHEMIE, INTERNATIONAL EDITION, Bd. 56, Nr. 20, 21. April 2017 (2017-04-21), Seiten 5402-5411, XP055405367, DE ISSN: 1433-7851, DOI: 10.1002/anie.201607552
- SEVERIN ROBERT FOIT ET AL: "Co-Electrolysis, Quo Vadis?", ECS TRANSACTIONS, Bd. 78, Nr. 1, 30. Mai 2017 (2017-05-30), Seiten 3139-3147, XP055609185, US ISSN: 1938-6737, DOI: 10.1149/07801.3139ecst
- Diercks Sebastian Justus: "Model-based performance analysis of a solid oxide co-electrolyzer to produce syngas for industrial applications", , 11. Oktober 2017 (2017-10-11), XP055609440, Gefunden im Internet: URL:https://www.itcp.kit.edu/deutschmann/d ownload/publications-others/Vertieferarbei t%20Justus%20Diercks20171010.pdf [gefunden am 2019-07-29]

## Beschreibung

Die Erfindung betrifft ein Verfahren und eine Vorrichtung zur Herstellung von Rohstoffen wie Carbonsäuren, die durch Oxidation eines Zwischenprodukts wie Methanol, Ammoniak oder Alkoholen hergestellt werden.

Bei einer Elektrolyse wird mit Hilfe von elektrischem Strom eine Redoxreaktion durchgeführt. Bei der Elektrolyse von H₂O entstehen in einer Elektrolysevorrichtung H₂ an der Kathode und O₂ an der Anode. Bei der Elektrolyse von CO₂ entstehen in einer Elektrolysevorrichtung CO an der Kathode und O₂ an der Anode.

Bei einer solchen Elektrolyse trennt eine für Sauerstoffionen durchlässige Wand einen Anodenraum mit einer darin befindlichen Anode von einem Kathodenraum mit einer darin befindlichen Kathode. Die Wand kann eine Membran oder ein Elektrolyt sein. Die im Kathodenraum entstandenen Sauerstoffionen passieren die Wand und rekombinieren im Anodenraum zu Sauerstoff.

Eine Elektrolyse kann bei niedrigen oder hohen Temperaturen wie zum Beispiel 300°C bis 1000°C durchgeführt werden.

Die Druckschriften Zheng et al. Chem. Soc. Rev. 2017, 46, 1427-1463; S. R. Foit, I. C. Vinke, L. G. J. de Haart, R.-A. Eichel, Angew. Chem. Int. Ed. 2017, 56, 5402-5411, Stoots, C., et al. (2012), "Nuclear-Powered Co-Electrolysis for Mars Combined Life Support and Methanol Production", Nuclear and Emerging Technologies for Space, Idaho National Laboratory offenbaren eine Elektrolyse von Wasser bzw. Wasserdampf und Kohlenstoffdioxid sowie Nutzungsmöglichkeiten. Es entsteht auf der Kathodenseite ein Gemisch aus H₂ und CO, das Synthesegas genannt wird. Aus diesem können gewünschte Rohstoffe hergestellt werden wie zum Beispiel synthetischer Kraftstoff.

Aus der Druckschrift EP 2 049 232 B1 ist ein Verfahren zur Wiederaufarbeitung von Verbrennungsprodukten fossiler Brennstoffe bekannt, bei dem Kohlendioxid und Wasser unter Zuhilfenahme regenerativ erzeugter Elektroenergie in synthetische Brenn- und Kraftstoffe prozessiert werden. Hierbei wird ein Syntheserohgas gebildet, welches im Anschluss daran zu Kohlenwasserstoffen oder Methanol umgewandelt wird.

Aus der Druckschrift DE 10 2013 102 969 A1 geht ein Herstellungsverfahren für überwiegend flüssige Kohlenwasserstoffe hervor, bei dem Kohlendioxid und Wasser unter Zuhilfenahme regenerativ erzeugter Elektroenergie zunächst zu einem Synthesegas und im Weiteren zu Methanol bzw. zu Kohlenwasserstoffen prozessiert werden.

Aus der Druckschrift WO 2015/185039 A1 ist ein Elektrolyseverfahren bekannt, gemäß dem in einer Elektrolyseanordnung zugeführtes Kohlendioxid und Wasser zu Kohlenmonoxid und Wasserstoff sowie Sauerstoff umgewandelt wird.

Die Druckschrift WO 2016/161998 A1 offenbart ein Herstellungsverfahren für Methan sowie für gasförmige und flüssige Kohlenwasserstoffe unter Einsatz einer CO₂ Elektrolyse.

Aus der Druckschrift DE 10 2016 218 235 A1 ist ein Elektrolyseverfahren bekannt, bei dem im Anschluss an die Elektrolyse ein Rohstoff durch Oxidation eines Zwischenprodukts hergestellt wird, wobei der durch die Elektrolyse erzeugte Sauerstoff verwendet wird. Bei dem Verfahren müssen Behälter zur Gastrennung eingesetzt werden, um entstehende Gase nutzen zu können. Mit dem Verfahren ist es nicht möglich, maßgeschneiderte Mengen und Verhältnisse von H₂ und CO zur Verfügung zu stellen.

Foit et al., ECS Transactions, 78(1), 3139-3147, Diercks, Vertieferarbeit "Model-based performance analysis of a solid oxide co-electrolyzer to produce syngas for industrial applications", 11. Oktober 2017, WO 2015/082130 A1 und US 2014/272734 A1 offenbaren weitere Elektrolyseverfahren.

Es ist Aufgabe der Erfindung, ausgehend von CO₂ und H₂O Rohstoffe effizient herzustellen.

Die Aufgabe wird durch ein Verfahren mit den Merkmalen des Patentanspruchs 1 gelöst. Eine Vorrichtung umfasst zur Lösung der Aufgabe die Merkmale des nebengeordneten Anspruchs. Vorteilhafte Ausgestaltungen ergeben sich aus den abhängigen Ansprüchen.

Im Verfahren des Patentanspruchs 1 wird eine Hochtemperatur - Elektrolyse durchgeführt. Rohstoffe können so besonders effizient hergestellt werden. Dies liegt u. a. daran, weil durch Vorsehen einer Hochtemperatur - Elektrolyse maßgeschneiderte Mengen und Verhältnisse von H₂ und CO (und entsprechend stöchiometrisch auch Sauerstoff) zur Verfügung gestellt werden können und zwar durch Variation der Betriebsparameter.

Eine Elektrolysevorrichtung im Sinne der vorliegenden Erfindung umfasst den genannten Anodenraum mit der darin befindlichen Anode und den genannten Kathodenraum mit der darin befindlichen Kathode. Die Elektrolysevorrichtung umfasst weiter die für Sauerstoffionen durchlässige Wand, die den Kathodenraum von dem Anodenraum trennt. Diese Wand kann eine Membran oder ein Elektrolyt sein. Diese Wand kann aus einer festen Oxidkeramik, typischerweise Yttrium- oder Scandiumstabilisiertes Zirkonoxid oder Gadoliniumdotiertes Ceroxid (GDC) oder Lanthan-Strontium-Gallium-Magnesium-Oxide (LSGM) bestehen. Die Wand dient dann als Elektrolyt. Bei elektrolytgestützten Elektrolysezellen beträgt die Wanddicke typischerweise 80 bis 250 µm. Bei elektroden- bzw. metallgestützten Elektrolysenzellen ist die typische Wanddicke zwischen 1 und 20 µm. Die Elektrolysevorrichtung umfasst eine Gleichspannungsquelle, die eine hinreichend hohe Spannung bereitstellen kann, um die Elektrolyse durchführen zu können. Die Elektrolysevorrichtung umfasst darüber hinaus ein Gehäuse, welches den Anodenraum und den Kathodenraum von der Umgebung trennt. Das Gehäuse ist hinreichend Temperatur beständig und hinreichend chemisch resistent. Das Material des Gehäuses kann aus ferritischen Hochtemperatur Edelstählen (z.B. Crofer 22 APU) mit Glas- und/oder Keramikeinsätzen bestehen.

Geeignete Materialien für die Anode sind mischleitende Werkstoffe wie keramische Perowskite (ABO₃), Doppel-Perowskite (AA'B₂O₆) oder Ruddlesden-Popper-Phasen (Aₙ₊₁BₙO₃ₙ₊₁) mit unterschiedlichen Valenz-Stöchiometrien, teilweise mit zusätzlich vermischtem Elektrolytmaterial:
- LSM: Lanthan-Strontium-Manganit (La,Sr)MnO₃
- LSC: Lanthan-Strontium-Kobaltit (La,Sr)CoO₃
- LSC: Lanthan-Strontium-Ferrit (La,Sr)FeO₃
- LSCF: Lanthan-Strontium-Kobaltferrit (La,Sr)(Fe,Co)O₃
- LSGM: Lanthan-Strontium-Gallium-Magnesium-Oxide
- generelle Möglichkeiten für A: Ca, Sr, Ba, La, Y, seltene Erden
- generelle Möglichkeiten für B: Ti, Zr, Hf, Sn, Ce, Tc, Al, Sc, V, Cr, Mn, Fe, Co, Ga, Nb, Ru, Mg, Zn, Ni, W, U, Te, Th, Pa, Np, Pu, Am, Rh

Geeignete Materialien für die Kathode sind Nickel- oder Nickellegierung-Cermet oder geeignete Perowskite (siehe Anodenmaterialien):
- Ni-YSZ, Ni/X-YSZ
- Ni-ScSZ, Ni/X-ScSZ
- Ni-CeOx, Ni-GDC

Weiterverarbeitung des durch Elektrolyse entstandenen Synthesegases zu einem Zwischenprodukt meint, dass im Kathodenraum erzeugtes Kohlenmonoxid und im Kathodenraum erzeugter Wasserstoff so weiter verarbeitet werden, dass dadurch mittelbar oder unmittelbar ein Zwischenprodukt entsteht. Grundsätzlich wird dafür Kohlenmonoxid und Wasserstoff aus dem Kathodenraum herausgeleitet und in eine Zwischenprodukt - Erzeugungsvorrichtung hineingeleitet. Die Zwischenprodukt - Erzeugungsvorrichtung ist so beschaffen, dass durch diese das Zwischenprodukt aus dem Wasserstoff und dem Kohlenmonoxid erzeugt wird. Dies schließt nicht aus, dass noch weitere ein oder mehrere Chemikalien an der Erzeugung des Zwischenprodukts beteiligt sind. Ein Zwischenprodukt im Sinne der vorliegenden Erfindung kann auch zweistufig erzeugt werden. Damit ist gemeint, dass aus dem Kohlenmonoxid und dem Wasserstoff zunächst ein Vorprodukt hergestellt wird. Wiederum können zur Herstellung des Vorprodukts eine oder mehrere weitere Chemikalien eingesetzt sein. Aus dem Vorprodukt wird im Anschluss daran das Zwischenprodukt hergestellt. Um aus dem Vorprodukt das Zwischenprodukt herzustellen, können ein oder mehrere weitere Chemikalien eingesetzt worden sein. Ein Zwischenprodukt im Sinne der vorliegenden Erfindung ist ferner so beschaffen, dass aus diesem durch Oxidation mit Sauerstoff der Rohstoff hergestellt werden kann. Grundsätzlich wird für die Erzeugung des Rohstoffs das Zwischenprodukt in eine Rohstoff - Erzeugungsvorrichtung gebracht. Außerdem wird Sauerstoff aus dem Anodenraum in die Rohstoff - Erzeugungsvorrichtung gebracht. In der Rohstoff - Erzeugungsvorrichtung wird der Rohstoff durch Oxidation des Zwischenprodukts hergestellt. Damit ist jedoch nicht gemeint, dass Oxidation der einzige Herstellungsschritt ist, um den gewünschten Rohstoff herzustellen. Es können also beispielsweise auch ein oder mehrere weitere Chemikalien an der Herstellung des Rohstoffs aus dem Zwischenprodukt beteiligt sein.

Herstellen des Rohstoffs durch Oxidation des Zwischenprodukts mit dem durch die Elektrolyse erzeugten Sauerstoff bedeutet nicht, dass ausschließlich Sauerstoff eingesetzt wird, der durch Elektrolyse erzeugt wurde. Es kann also sowohl durch Elektrolyse erzeugter Sauerstoff an einer Umsetzung zu einem Rohstoff beteiligt sein als auch Sauerstoff, der nicht zuvor durch Elektrolyse in der Elektrolysevorrichtung erzeugt wurde.

Sauerstoff wird während der Elektrolyse in den Anodenraum eingeleitet, um so die Aufgabe der Erfindung verbessert zu lösen. Es muss sich bei dem in den Anodenraum eingeleiteten Sauerstoff nicht zwingend um Sauerstoff mit einem sehr hohen Reinheitsgrad handeln. Der Reinheitsgrad muss lediglich so ausgesucht sein, dass weitere Gasbestandteile eines Gasgemisches, welches den Sauerstoff enthält, die Herstellung des Rohstoffs durch Oxidation nicht verhindern oder deutlich beeinträchtigen. Durch das Einleiten des Sauerstoffs in den Anodenraum steht bei Bedarf ein Gas zur Kühlung zur Verfügung, um die Elektrolyse verbessert durchführen zu können.

Es wird Sauerstoff in den Anodenraum eingeleitet, dessen Reinheitsgrad bei wenigstens 90 %, besonders bevorzugt bei wenigstens 95 % liegt. Ein Zusatz von Stickstoff oder anderen Inertgasen ermöglicht in einer vorteilhaften Ausgestaltung der Erfindung niedrigere Konzentration, falls hohe nicht möglich sind.
Der Anodenraum weist in einer Ausgestaltung des Verfahrens einen Gaseinlass und einen Gasauslass auf. Im Anodenraum befindlicher Sauerstoff wird aus dem Anodenraum über den Gasauslass herausgeleitet und anschließend durch den Gaseinlass wieder in den Anodenraum eingeleitet. Sauerstoff wird aus dem Anodenraum wird also zum Teil zur Oxidation des Zwischenprodukts verwendet und zu einem anderen Teil im Kreislauf geführt, um so die Wirtschaftlichkeit des Verfahrens weiter zu verbessern.

Der aus dem Anodenraum herausgeleitete Sauerstoff, der anschließend in den Anodenraum wieder eingeleitet und so im Kreislauf geführt wird, wird vorteilhaft gekühlt und zwar vorzugsweise durch einen Wärmetauscher. Der Anodenraum kann so verbessert gekühlt werden, um die Wirtschaftlichkeit des Verfahrens weiter zu verbessern.

In einer Ausgestaltung des Verfahrens weist der Kathodenraum einen Gaseinlass und einen Gasauslass auf. Im Kathodenraum erzeugtes Synthesegas wird aus dem Gasauslaus herausgeleitet wird und anschließend wieder in den Kathodenraum über den Gaseinlass eingeleitet. Wiederum wird also ein Teil des Synthesegases verwendet, um daraus ein Zwischenprodukt zu erzeugen. Ein anderer Teil des Synthesegases wird im Kreislauf geführt. Hierdurch können Beschädigungen der Elektrolysezelle verbessert vermieden werden.

Als Zwischenprodukt werden in einer Ausgestaltung des Verfahrens Aldehyd, Methanol, Ammoniak, Alkohol oder Olefine erzeugt.

In einer Ausgestaltung des Verfahrens wird das Zwischenprodukt durch Oxidation mit Sauerstoff zu Carbonsäure, Formaldehyd, Stickoxide, Ketone oder Epoxide als Rohstoff umgesetzt. Es wird also durch Oxidation mit Sauerstoff aus dem Zwischenprodukt der Rohstoff hergestellt.

Vorteilhaft wird die Elektrolyse bei einer Temperatur von 600°C bis 900°C durchgeführt, um besonders wirtschaftlich herzustellen.

Durch die Erfindung werden insbesondere mittels Hochtemperatur - Elektrolyse von Wasser und Kohlenstoffdioxid gleichzeitig Wasserstoff, Sauerstoff und Kohlenstoffmonoxid zur Verfügung gestellt. Es resultieren zwei Produktströme, die zum einen aus Wasserstoff (H₂) und Kohlenstoffmonoxid (CO) zum anderen aus Sauerstoff (O₂) bestehen. Durch Variation der Betriebsparameter können zur Herstellung eines gewünschten Rohstoffs maßgeschneiderte Mengen und Verhältnisse von H₂ und CO zur Verfügung gestellt werden. Gleichzeitig kann im Produktstrom auf der anderen Seite der Elektrolysezelle die entsprechend benötigte Menge Sauerstoff bereitgestellt werden. Beide Stoffströme werden auf die Bedürfnisse von katalytischen Folgeprozessen angepasst und somit integriert. Eventuell bei den Oxidationsprozessen entwickeltes Wasser kann vorteilhaft in die Elektrolyse zurückgeführt werden. Überschüssiges CO, H₂, O₂ können in die Elektrolyse zurückgeführt oder für Folgeprozesse verwendet werden. Es können so mit geringem technischem Aufwand gewünschte Rohstoffe hergestellt werden. Betriebsparameter sind bei einer Hochtemperatur - Elektrolyse die Temperatur, der elektrische Strom und die Flußrate der zugeführten Gasströme.

Nachfolgend werden einige Beispiele angegeben.

Aus dem Synthesegas werden in einem Ausführungsbeispiel durch Hydroformylierung Aldehyde als Zwischenprodukt hergestellt. Durch Oxidation mit Sauerstoff werden aus den Aldehyden Carbonsäuren als Rohstoff erzeugt. In diesem Ausführungsbeispiel werden CO₂ und H₂O bevorzugt im Verhältnis 1:1 in den Kathodenraum der Elektrolysevorrichtung zugeführt. Es wird durch Elektrolyse O₂ hergestellt. Im Verhältnis CO:H₂:O₂ = 1:1:1 werden diese durch Elektrolyse erzeugten Gase bevorzugt aus der Elektrolysevorrichtung herausgeleitet und weiterverarbeitet. Zwischenprodukte der Hydroformylierung werden mit dem Sauerstoff zum Rohstoff Carbonsäure umgesetzt, wobei pro mol Carbonsäure 0,5 mol Sauerstoff eingesetzt wird.

Aus dem Synthesegas wird in einem Ausführungsbeispiel durch Methanolsynthese Methanol als Zwischenprodukt hergestellt. Durch Oxidation mit Sauerstoff wird aus dem Methanol Formaldehyd als Rohstoff erzeugt. Bei diesem Ausführungsbeispiel werden CO₂ und H₂O bevorzugt im Verhältnis 1:2 in den Kathodenraum der Elektrolysevorrichtung eingeleitet. Es wird durch Elektrolyse O₂ hergestellt. Im Verhältnis CO:H₂:O₂ = 2:4:3 werden diese durch Elektrolyse erzeugten Gase bevorzugt aus der Elektrolysevorrichtung herausgeleitet und weiterverarbeitet. Das Zwischenprodukt Methanol wird mit dem Sauerstoff zum Rohstoff Formaldehyd umgesetzt, wobei pro mol Formaldehyd 0,5 mol Sauerstoff eingesetzt wird.

Aus dem Synthesegas wird in einem Ausführungsbeispiel durch Ammoniaksynthese Ammoniak als Zwischenprodukt hergestellt. Durch Oxidation mit Sauerstoff werden aus dem Ammoniak Stickoxide als Rohstoff erzeugt. Bei diesem Ausführungsbeispiel werden CO₂ und H₂O bevorzugt im Verhältnis 2:1 in den Kathodenraum der Elektrolysevorrichtung eingeleitet. Das Zwischenprodukt Ammoniak wird mit dem Sauerstoff zu Stickoxiden umgesetzt, wobei pro mol Ammoniak 1,25 mol Sauerstoff für die Herstellung von NO eingesetzt wird. Für die Herstellung von N₂O wird 1 mol Sauerstoff eingesetzt. Für die Herstellung von NO₂ wird 1,75 mol Sauerstoff eingesetzt. Aus dem Synthesegas werden in einem Ausführungsbeispiel durch Alkoholsynthese Alkohole als Zwischenprodukt hergestellt. Durch Oxidation mit Sauerstoff werden aus den Alkoholen Aldehyde/Ketone als Rohstoff erzeugt. Bei diesem Ausführungsbeispiel werden CO₂ und H₂O bevorzugt im Verhältnis 2:1 in den Kathodenraum der Elektrolysevorrichtung eingeleitet. Es wird durch Elektrolyse O₂ hergestellt. Im Verhältnis CO:H₂:O₂ = 1:1:1 werden diese durch Elektrolyse erzeugten Gase aus der Elektrolysevorrichtung herausgeleitet und weiterverarbeitet. Das Zwischenprodukt Alkohol wird mit dem Sauerstoff zu Aldehyden/Ketonen und/oder Carbonsäuren umgesetzt, wobei pro mol Aldehyd/Keton 0,5 mol Sauerstoff eingesetzt wird. Für die Herstellung von Carbonsäuren werden 1 mol Sauerstoff eingesetzt.

Aus dem Methanol können in einem Ausführungsbeispiel durch MtO (Methanol to Olefins) ungesättigte Kohlenwasserstoffe als Zwischenprodukt erzeugt werden. Durch Epoxidierung, d.h. ebenfalls Oxidation, der ungesättigten Kohlenwasserstoffe werden Epoxide hergestellt.

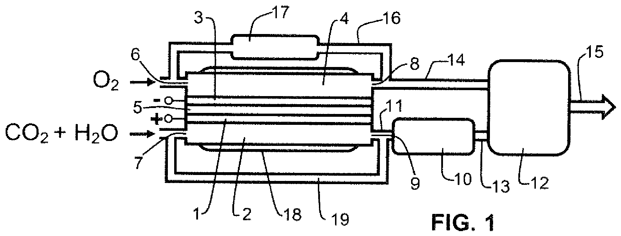

Die Figur 1 zeigt ein System zur Durchführung des Verfahrens.

Zur Lösung der Aufgabe dient ein in der Figur 1 gezeigtes System zur Erzeugung eines Rohstoffs. Das System umfasst eine Elektrolysevorrichtung mit einer Kathode 1 in einem Kathodenraum 2 und einer Anode 3 in einem Anodenraum 4. Es ist eine für Sauerstoffionen durchlässige Wand 5 vorhanden, die den Kathodenraum 2 von dem Anodenraum 4 trennt. Kathodenraum 2 und Anodenraum 4 weisen einen Gaseinlass 6 bzw. 7 und einen Gasauslass 8 bzw. 9 auf. Es ist eine Zwischenprodukt - Erzeugungsvorrichtung 10 vorhanden, durch die ein Zwischenprodukt aus Synthesegas erzeugt werden kann. Das System umfasst eine Synthesegas - Weiterleitungseinrichtung 11, mit der Synthesegas aus dem Kathodenraum 2 in die Zwischenprodukt - Erzeugungsvorrichtung 10 geleitet werden kann. Das System weist eine Rohstoff - Erzeugungsvorrichtung 12 auf, durch die ein Rohstoff durch Oxidation des Zwischenprodukts mittels Sauerstoff erzeugt werden kann. Es ist eine Zwischenprodukt - Weiterleitungseinrichtung 13 vorhanden, mit der ein Zwischenprodukt aus der Zwischenprodukt - Erzeugungsvorrichtung 10 in die Rohstoff - Erzeugungsvorrichtung 12 geleitet werden kann. Das System umfasst eine Sauerstoff - Weiterleitungseinrichtung 14, mit der Sauerstoff vom Gasauslass des Anodenraums in die Rohstoff - Erzeugungsvorrichtung geleitet werden kann. Es gibt eine Entnahmeeinrichtung 15, mit der Rohstoff aus der Rohstoff - Erzeugungsvorrichtung 12 entnommen werden kann. Mit diesem System kann das erfindungsgemäße Verfahren durchgeführt werden.

Das System umfasst in einer vorteilhaften Ausgestaltung eine Anodenraum - Rückführungseinrichtung 16, mit der Sauerstoff vom Gasauslass 8 des Anodenraums 4 in den Gaseinlass 6 des Anodenraums 4 geleitet werden kann. Alternativ oder ergänzend gibt es vorzugsweise eine Kathodenraum - Rückführungseinrichtung 19, mit der Synthesegas vom Gasauslass des Kathodenraums in den Gaseinlass des Kathodenraums geleitet werden kann.

Die Anodenraum - Rückführungseinrichtung 16 umfasst vorzugsweise eine Kühleinrichtung, mit der in der Anodenraum - Rückführungseinrichtung befindlicher Sauerstoff gekühlt werden kann. Als Kühleinrichtung dient insbesondere ein Wärmetauscher 17. Wärme wird vom System über den Wärmetauscher 17 an die Umgebung abgegeben, um so mit geringem technischem Aufwand besonders wirtschaftlich zu kühlen.

Vorteilhaft ist eine Heizeinrichtung 18 vorhanden ist, mit der die Elektrolysevorrichtung erwärmt werden kann, um so mit hohem Wirkungsgrad und damit besonders wirtschaftlich herstellen zu können.

Der Anodenraum dient vorteilhaft als Gasführungsraum der Sauerstoffherstellung. Eine Anodenraum-Rückführungseinrichtung kann eine geregelt abgezweigte Rückführungsleitung des Produktgasstroms aus dem Anodenraum sein oder umfassen.

Eine Rohstoff-Erzeugungsvorrichtung umfasst regelmäßig einen Wasserverdampfer, eine CO₂-Auffang- und Konzentrierungsanlage, eine Mischeinheit für Wasserdampf, CO₂ und/oder eine Kathoden-Produktgasrückführung.

Zur Weiterleitung werden insbesondere Verrohrungen, Pumpen und Massenflussreglungssysteme verwendet, sowie eventuelle Verdichter, da die Synthesegasreaktionen und manche Oxidationsreaktionen unter Druck ablaufen müssen. Die Drücke variieren je nach Verfahren zwischen Atmosphärendruck bis 300 bar.

Idealerweise kann eine Wärmekopplung im Gesamtsystem zur Steigerung der Gesamtsystemeffizienz erfolgen.

Die Figur 1 zeigt den Fall, dass die beiden Elektroden 1 und 3 die Wand 5 vollständig bedecken. Zugeführte Gase kontaktieren also immer zuerst die Elektroden 1 und 3, bevor diese durch die Elektroden hindurch zur Wand 5 gelangen. Die Wand 5 ist für die zugeführten Gase undurchlässig. Die Elektroden 1 und 3 sind grundsätzlich porös, damit zugeführte Gase zur Wand 5 gelangen können.

## Patentansprüche

1. Verfahren zur Herstellung eines Rohstoffs mit den Schritten,
Zuführung von CO₂ und H₂O in den Kathodenraum (2) einer Elektrolysevorrichtung und Erzeugen eines Synthesegases durch Anlegen einer Gleichspannung an die im Anodenraum (4) befindliche Anode (3) und die im Kathodenraum (2) befindliche Kathode (1) der Elektrolysevorrichtung, wobei der Anodenraum (4) von dem Kathodenraum (2) durch eine für Sauerstoffionen durchlässige Wand (5) getrennt ist;
wobei eine Hochtemperatur - Elektrolyse durchgeführt wird; Weiterverarbeitung des durch Elektrolyse entstandenen Synthesegases zu einem Zwischenprodukt in einer Zwischenprodukt - Erzeugungsvorrichtung (10),
Herstellen des Rohstoffs durch Oxidation des Zwischenprodukts mit durch die Elektrolyse erzeugtem Sauerstoff in einer Rohstoff - Erzeugungsvorrichtung (12),
**dadurch gekennzeichnet, dass** Sauerstoff während der Elektrolyse in den Anodenraum (4) über einen Gaseinlass (6) eingeleitet wird, wobei der Reinheitsgrad des in den Anodenraum eingeleiteten Sauerstoffs bei wenigstens 90% liegt.

2. Verfahren nach dem vorgehenden Anspruch, bei der der Anodenraum (4) einen Gasauslass (8) aufweist und im Anodenraum (4) befindlicher Sauerstoff aus dem Anodenraum (4) über den Gasauslass (8) herausgeleitet wird und der herausgeleitete Sauerstoff anschließend in den Gaseinlass (6) des Anodenraums (4) eingeleitet wird.

3. Verfahren nach dem vorgehenden Anspruch, bei dem der aus dem Anodenraum (4) herausgeleitete Sauerstoff vor seiner anschließenden Einleitung in den Anodenraum (4) gekühlt wird und zwar vorzugsweise durch einen Wärmetauscher.

4. Verfahren nach einem der vorhergehenden Ansprüche, **dadurch gekennzeichnet, dass** der Kathodenraum (2) einen Gaseinlass (7) und einen Gasauslass (9) aufweist und im Kathodenraum (2) erzeugtes Synthesegas aus dem Gasauslaus (9) herausgeleitet wird und anschließend wieder in den Kathodenraum (2) über den Gaseinlass (7) eingeleitet wird.

5. Verfahren nach einem der vorhergehenden Ansprüche, **dadurch gekennzeichnet, dass** aus dem Synthesegas als Zwischenprodukt Aldehyd, Ammoniak, Alkohol, beispielsweise Methanol, oder Olefine erzeugt werden.

6. Verfahren nach einem der vorhergehenden Ansprüche, **dadurch gekennzeichnet, dass** aus dem Zwischenprodukt als Rohstoff durch Oxidation mittels Sauerstoff Carbonsäure, Formaldehyd, Stickoxide, Ketone oder Epoxide erzeugt wird.

7. Verfahren nach einem der vorhergehenden Ansprüche, **dadurch gekennzeichnet, dass** die Elektrolyse bei einer Temperatur von 600°C bis 900°C durchgeführt wird.

8. Verfahren nach einem der vorhergehenden Ansprüche, bei dem CO₂ und H₂O im Verhältnis 2:1 bis 1:2 in den Kathodenraum der Elektrolysevorrichtung eingeleitet werden.

9. System zur Erzeugung eines Rohstoffs nach einem Verfahren mit den Merkmalen nach einem der vorhergehenden Ansprüche, umfassend eine Elektrolysevorrichtung mit einer Kathode (1) in einem Kathodenraum (2) und einer Anode (3) in einem Anodenraum (4), mit einer für Sauerstoffionen durchlässigen Wand (5), die den Kathodenraum (2) von dem Anodenraum (4) trennt, wobei der Kathodenraum (2) einen Gaseinlass (7) sowie einen Gasauslass (9) und der Anodenraum (4) einen Gaseinlass (6) sowie einen Gasauslass (8) aufweisen, mit einer Zwischenprodukt - Erzeugungsvorrichtung (10), durch die ein Zwischenprodukt aus Synthesegas erzeugt werden kann, mit einer Synthesegas - Weiterleitungseinrichtung (11), mit der Synthesegas aus dem Kathodenraum (2) in die Zwischenprodukt - Erzeugungsvorrichtung (10) geleitet werden kann, mit einer Rohstoff - Erzeugungsvorrichtung (12), durch die ein Rohstoff durch Oxidation des Zwischenprodukts mittels Sauerstoff erzeugt werden kann, mit einer Zwischenprodukt - Weiterleitungseinrichtung (13), mit der ein Zwischenprodukt aus der Zwischenprodukt - Erzeugungsvorrichtung (10) in die Rohstoff - Erzeugungsvorrichtung (12) geleitet werden kann, mit einer Sauerstoff - Weiterleitungseinrichtung (14), mit der Sauerstoff vom Gasauslass (8) des Anodenraums (4) in die Rohstoff - Erzeugungsvorrichtung (15) geleitet werden kann, mit einer Entnahmeeinrichtung (15), mit der Rohstoff aus der Rohstoff - Erzeugungsvorrichtung (12) entnommen werden kann, **dadurch gekennzeichnet, dass** das System eine Sauerstoffquelle mit Sauerstoff umfasst, und eine Einrichtung zur Einleitung des Sauerstoffs in den Gaseinlass (6) hinein, wobei der Reinheitsgrad des in den Anodenraum eingeleiteten Sauerstoffs bei wenigstens 90% liegt.

10. System nach dem vorhergehenden Anspruch mit einer Anodenraum - Rückführungseinrichtung (16), mit der Sauerstoff vom Gasauslass (8) des Anodenraums (4) in den Gaseinlass (6) des Anodenraums (4) geleitet werden kann und/oder mit einer Kathodenraum - Rückführungseinrichtung (19), mit der Synthesegas vom Gasauslass (9) des Kathodenraums (2) in den Gaseinlass (7) des Kathodenraums (2) geleitet werden kann.

11. System nach dem vorhergehenden Anspruch, wobei die Anodenraum - Rückführungseinrichtung (16) eine Kühleinrichtung (17) umfasst, mit der in der Anodenraum - Rückführungseinrichtung (16) befindlicher Sauerstoff gekühlt werden kann.

12. System nach einem der drei vorhergehenden Ansprüche, **dadurch gekennzeichnet, dass** eine Heizeinrichtung (18) vorhanden ist, mit der die Elektrolysevorrichtung erwärmt werden kann.

13. System nach einem der vier vorhergehenden Ansprüche, **dadurch gekennzeichnet, dass** die für Sauerstoffionen durchlässige Wand (5) aus einer festen Oxidkeramik besteht.

14. System nach dem vorhergehenden Anspruch, **dadurch gekennzeichnet, dass** die für Sauerstoffionen durchlässige Wand (5) aus Yttrium- oder Scandiumstabilisiertem Zirkonoxid oder aus Gadolinium dotiertem Ceroxid (GDC) oder aus Lanthan-Strontium-Gallium-Magnesium-Oxide (LSGM) besteht.

## Claims

1. Method for producing a raw material comprising the steps,
Feeding CO₂ and H₂O into the cathode compartment (2) of an electrolysis apparatus and generating a synthesis gas by applying a DC voltage to the anode (3) located in the anode compartment (4) and the cathode (1) of the electrolysis apparatus located in the cathode compartment (2), wherein the anode compartment (4) is separated from the cathode compartment (2) by a wall (5) permeable to oxygen ions;
wherein a high temperature electrolysis is performed;
Further processing the synthesis gas produced by electrolysis into an intermediate product in an intermediate product generating apparatus (10), Producing the raw material by oxidizing the intermediate product with oxygen generated by the electrolysis in a raw material generating apparatus (12), **characterized in that** oxygen is introduced into the anode compartment (4) via a gas inlet (6) during the electrolysis, wherein the purity of the oxygen introduced into the anode compartment is at least 90%.

2. Method according to the preceding claim, in which the anode compartment (4) has a gas outlet (8) and oxygen present in the anode compartment (4) is discharged from the anode compartment (4) via the gas outlet (8) and the oxygen discharged is subsequently introduced into the gas inlet (6) of the anode compartment (4).

3. Method according to the preceding claim, in which the oxygen discharged from the anode compartment (4) is cooled before its subsequent introduction into the anode compartment (4), preferably by means of a heat exchanger.

4. Method according to one of the preceding claims, **characterized in that** the cathode compartment (2) has a gas inlet (7) and a gas outlet (9), and synthesis gas generated in the cathode compartment (2) is discharged from the gas outlet (9) and subsequently reintroduced into the cathode compartment (2) via the gas inlet (7).

5. Method according to one of the preceding claims, **characterized in that** aldehyde, ammonia, alcohol, for example methanol, or olefins are produced from the synthesis gas as intermediate product.

6. Method according to one of the preceding claims, **characterized in that** carboxylic acid, formaldehyde, nitrogen oxides, ketones or epoxides are produced from the intermediate product as raw material by oxidation using oxygen.

7. Method according to one of the preceding claims, **characterized in that** the electrolysis is performed at a temperature of 600°C to 900°C.

8. Method according to one of the preceding claims, in which CO₂ and H₂O are introduced into the cathode compartment of the electrolysis apparatus in a ratio of 2:1 to 1:2.

9. System for producing a raw material according to a method having the features according to one of the preceding claims, having an electrolysis apparatus having a cathode (1) in a cathode compartment (2) and an anode (3) in an anode compartment (4), having a wall (5) which is permeable to oxygen ions and separates the cathode compartment (2) from the anode compartment (4) wherein the cathode compartment (2) has a gas inlet (7) and a gas outlet (9) and the anode compartment (4) has a gas inlet (6) and a gas outlet (8), having an intermediate product generating apparatus (10) by which an intermediate product can be generated from synthesis gas, having a synthesis gas transfer apparatus (11) by which synthesis gas can be conducted from the cathode compartment (2) to the intermediate product generating apparatus (10), having a raw material generating apparatus (12) by which a raw material can be produced by oxidation of the intermediate product using oxygen, having an intermediate product transfer means (13) by which an intermediate product can be conducted from the intermediate product generating apparatus (10) to the raw material generating apparatus (12), having an oxygen transfer means (14) by which oxygen can be conducted from the gas outlet (8) of the anode compartment (4) into the raw material generating apparatus (15), having an extraction means (15) by which raw material can be extracted from the raw material generating apparatus (12), **characterized in that** the system comprises an oxygen source with oxygen and means for introducing the oxygen into the gas inlet (6), wherein the purity of the oxygen introduced into the anode compartment is at least 90%.

10. System according to the preceding claim, having an anode compartment recirculation means (16) by which oxygen can be conducted from the gas outlet (8) of the anode compartment (4) into the gas inlet (6) of the anode compartment (4) and/or having a cathode compartment recirculation means (19) by which synthesis gas can be conducted from the gas outlet (9) of the cathode compartment (2) into the gas inlet (7) of the cathode compartment (2).

11. System according to the preceding claim, wherein the anode compartment recirculation means (16) comprises a cooling means (17) by which oxygen present in the anode compartment recirculation means (16) can be cooled.

12. System according to one of the three preceding claims, **characterized in that** a heating device (18) is provided, by means of which the electrolysis device can be heated up.

13. System according to one of the four preceding claims, **characterized in that** the wall (5) permeable to oxygen ions consists of a solid oxide ceramic.

14. System according to the preceding claim, **characterized in that** the wall (5) permeable to oxygen ions consists of yttrium- or scandium-stabilized zirconium oxide or of gadolinium-doped cerium oxide (GDC) or of lanthanum-strontium-gallium-magnesium oxide (LSGM).

## Revendications

1. Procédé de fabrication d'une matière première comprenant les étapes de :
alimenter CO₂ et H₂O dans le compartiment de cathode (2) d'un dispositif d'électrolyse et générer un gaz de synthèse an appliquant une tension continue à l'anode (3), qui se trouve dans le compartiment d'anode(4), et à la cathode (1), qui se trouve dans le compartiment de cathode (2) du dispositif d'électrolyse, le compartiment d'anode (4) étant séparé du compartiment de cathode (2) par une paroi (5) perméable pour des ions d'oxygène ;
dans lequel une électrolyse à hautes températures est effectuée ;
traiter le gaz de synthèse généré par l'électrolyse dans un dispositif de génération de produit intermédiaire (10) pour obtenir un produit intermédiaire, fabriquer la matière première par moyen de l'oxydation du produit intermédiaire avec l'oxygène généré par l'électrolyse dans un dispositif de fabrication de matière première (12),
**caractérisé en ce que** de l'oxygène est introduit dans le compartiment d'anode (4) via une entrée de gaz (6) pendant l'électrolyse, le degré de pureté de l'oxygène introduit dans le compartiment d'anode étant au moins 90%.

2. Procédé selon la revendication précédente, dans lequel le compartiment d'anode (4) comprend une sortie de gaz (8) et de l'oxygène se trouvant dans le compartiment d'anode (4) est déchargé via la sortie de gaz (8) et l'oxygène sorti est ensuite introduit dans l'entrée de gaz (6) du compartiment d'anode (4).

3. Procédé selon la revendication précédente, dans lequel l'oxygène déchargé du compartiment d'anode (4) est refroidi avant de l'introduire ensuite dans le compartiment d'anode (4), de préférence par moyen d'un échangeur thermique.

4. Procédé selon l'une des revendications précédentes, **caractérisé en ce que** le compartiment de cathode (2) comprend une entrée de gaz (7) et une sortie de gaz (9) et le gaz de synthèse généré dans le compartiment de cathode (2) est déchargé via la sortie de gaz (9) et est réintroduit ensuite dans le compartiment de cathode (2) via l'entrée de gaz (7).

5. Procédé selon l'une des revendications précédentes, **caractérisé en ce qu'**un produit intermédiaire, tel que l'aldéhyde, l'ammoniac, l'alcool, par exemple le méthanol, ou des oléfines, est généré à partir du gaz de synthèse.

6. Procédé selon l'une des revendications précédentes, **caractérisé en ce que** de l'acide carboxylique, du formaldéhyde, des oxydes nitriques, des cétones ou des époxydes sont générés comme matière première à partir du produit intermédiaire par moyen de l'oxydation à l'aide d'oxygène.

7. Procédé selon l'une des revendications précédentes, **caractérisé en ce que** l'électrolyse est effectuée à une température comprise entre 600°C et 900°C.

8. Procédé selon l'une des revendications précédentes, **caractérisé en ce que** le CO₂ et le H₂O sont introduits dans le rapport de 2 : 1 à 1 : 2 dans le compartiment de cathode du dispositif d'électrolyse.

9. Système de fabrication d'une matière première selon un procédé comprenant les caractéristiques selon l'une des revendications précédentes, comprenant un dispositif d'électrolyse avec une cathode (1) dans un compartiment de cathode (2) et une anode (3) dans un compartiment d'anode (4), comprenant une paroi (5) perméable pour des ions d'oxygène, laquelle paroi sépare le compartiment de cathode (2) du compartiment d'anode (4), dans lequel le compartiment de cathode (2) comprend une entrée de gaz (7) ainsi qu'une sortie de gaz (9) et le compartiment d'anode (4) comprend une entrée de gaz (6) ainsi qu'une sortie de gaz (8), comprenant un dispositif de génération de produit intermédiaire (10), par moyen duquel un produit intermédiaire peut être généré à partir de gaz de synthèse, comprenant un dispositif de transport de gaz de synthèse (11), à l'aide duquel du gaz de synthèse peut être guidé hors du compartiment de cathode (2) dans le dispositif de génération de produit intermédiaire (10), comprenant un dispositif de fabrication de matière première (12), a l'aide duquel une matière première peut être générée par moyen de l'oxydation du produit intermédiaire par moyen d'oxygène, comprenant un dispositif de transport de produit intermédiaire (13), à l'aide duquel un produit intermédiaire peut être guidé hors du dispositif de fabrication de produit intermédiaire (10) dans le dispositif de fabrication de matière première (12), comprenant un dispositif de transport d'oxygène (14), à l'aide duquel l'oxygène peut être guidé de la sortie de gaz (8) du compartiment d'anode (4) dans le dispositif de fabrication de matière première (12), comprenant un dispositif de prélèvement (15), à l'aide duquel la matière première peut être sortie dans le dispositif de fabrication de matière première (12), **caractérisé en ce que** le système comprend une source d'oxygène avec de l'oxygène, et un dispositif d'introduction de l'oxygène dans l'entrée de gaz (6), le degré de pureté de l'oxygène introduit dans le compartiment d'anode étant au moins 90%.

10. Système selon la revendication précédente, comprenant un dispositif de renvoi au compartiment d'anode (16), à l'aide duquel de l'oxygène peut être guidé de la sortie de gaz (8) du compartiment d'anode (4) dans l'entrée de gaz (6) du compartiment d'anode (4) et/ou comprenant un dispositif de renvoi au compartiment de cathode (19), à l'aide duquel du gaz de synthèse peut être guidé de la sortie de gaz (9) du compartiment de cathode (2) dans l'entrée de gaz (7) du compartiment de cathode (2).

11. Système selon la revendication précédente, dans lequel le dispositif de renvoi au compartiment d'anode (16) comprend un dispositif de refroidissement (17), à l'aide duquel l'oxygène, qui se trouve dabs le dispositif de renvoi au compartiment d'anode (16), peut être refroidi.

12. Système selon l'une des trois revendications précédentes, **caractérisé en ce qu'**il y a un dispositif de chauffage (18), à l'aide duquel le dispositif d'électrolyse peut être chauffé.

13. Système selon l'une des quatre revendications précédentes, **caractérisé en ce que** la paroi (5) perméable pour des ions d'oxygène est fabriquée en céramique d'oxyde solide.

14. Système selon la revendication précédente, **caractérisé en ce que** la paroi (5) perméable pour des ions d'oxygène est fabriquée en oxyde de zircone stabilisé par l'yttrium ou par le scandium ou en oxyde de cérium dopé de gadolinium (GDC) ou en oxyde de lanthane-strontium-gallium-magnésium (LSGM).
